# EUROPEAN PATENT APPLICATION

(11) **EP 4 391 513 A1**
(43) Date of publication of application: **26.06.2024**
(21) Application number: 22306938.6
(22) Date of filing: 19.12.2022
(51) Int. Cl.: H04M 15/00

(54) **COMPUTER-IMPLEMENTED METHOD FOR DETECTING AND PREVENTING TELECOMMUNICATION FRAUD THROUGH ARTIFICIAL INTELLIGENCE ONLINE**

(71) Applicant: Institut Mines Telecom, 91120 Palaiseau (FR); Viavi Solutions France SAS, 44800 Saint-Herblain (FR); Araxxe SAS, 69006 Lyon (FR)
(72) Inventor: BIFFET, Albert, PALAISEAU (FR); MEMMI, Gérard, PALAISEAU (FR); MSAHLI, Mounira, PALAISEAU (FR); TAO, Weichen, PALAISEAU (FR); WAHID, Abdul, PALAISEAU (FR); CHESNEAU, Fabrice, SAINT-HERBLAIN (FR); PERRON, LILIAN, LYON (FR)
(74) Representative: Cabinet Nony

(57) **Abstract**

The disclosure relates to a computer-implemented method for detecting frauds online in a telecommunication network, using a pattern matching module trained beforehand to learn reference patterns, each reference pattern comprising at least one parameter associated with at least one fraud method, said reference patterns being stored beforehand in a patterns database, the method comprising at least the following steps:
a. when an outgoing or incoming transaction is detected on said telecommunication network, retrieving at least one parameter associated with said transaction to form a transaction pattern,
b. operating said pattern matching module on said transaction pattern, and
c. taking an action if a match is found between said transaction pattern and at least one reference pattern, indicating that the current transaction is a fraud.

## Description

### Technical field

The invention relates to methods and systems to detect and prevent telecommunication fraud methods online.

The rapid growth of the telecommunication landscape had led to a rapid rise of frauds in telecommunication networks.

Telecommunication frauds costs billions of Euros annually according to the Cyber Telecom Crime Report issued in 2019, which accounts for about three to ten percent of the operator's gross revenue. However, detecting such frauds has become increasingly difficult nowadays because of the rapidly changing behavior of fraudsters and the growing complexity of the telecommunication network.

### Prior art

Works for detection of fraudulent mobile stations could be found as early as the nineties, and from the growth of artificial intelligence techniques fraud specific solutions can recently be found.

Patent US 5,953,652 discloses a system for detecting fraudulent unique identifiers of mobile stations using a monitoring system that collects station registration data and a fraud detection processor. The latter detects fraud using a pattern recognition device that only measures the periodicity and apparent speed, calculated by the geographical distance and time between successive messages, of successive registration messages. These are compared with the predetermined maximum speed and duration to detect fraudulent devices.

International application WO 1994/0119559 describes a system consisting of an interface for connecting to a mobile switching center (MSC) to receive calls and a unit for comparing the call characteristics with subscriber-specific patterns and thresholds. The subscriber-specific patterns are retrieved from the subscriber's call history. In particular, alerts are sent if the subscriber's call speed and/or duration are doubled. This method is thus not performed globally, but subscriber by subscriber.

Patent US 11,196,859 describes a method for detecting automated telephone calls delivering recorded message, also known as robocalls. The method comprises the generation of a robocall score, a number similarity score and a call length prediction request for a telephone call request. A robocall prediction score is generated based at least in part on these metrics, and the phone call request is rejected when the robocall prediction score indicates that the phone call request is invalid.

Patent US 11,233,900 describes a system in which a spam factor is assigned to each phone call, such a spam factor being retrieved based on the user input received using predictive modelling, and being calculated using, among other things, the phone number's area code, call times, call dates, whether it is a private or toll-free number, number of blocked calls, answered calls for each number, call frequency for each phone number over a certain period of time, ringing time for each call, call duration. Based on this spam factor, the call is classified as probable, not probable or certain spam, and the necessary measures are taken. The feedback obtained from the user and the spam factor are then updated.

Application US 2021/0058511 describes a system for identifying undesirable behavior of user accounts in global networks, using compilation of database storing data organized by communication campaigns, so that communications related to undesirable or fraudulent activities can be identified, grouped and separated from legitimate communication activities. Communication campaigns may include a grouping of related patterns or fingerprints that identify a sequence of characters, sounds or videos associated with the same campaigns. It is also proposed to use machine learning and speech recognition to classify legitimate and undesirable behavior.

Patent US 2022/0006899 describes a call centre fraud detection system. Machine learning models are used to calculate fraud risk scores, and customer feedback is used to update fraud significance scores. A database is configured to store a plurality of machine learning models and an analysis server is configured to receive one or more parameters comprising attributes to generate risk scores for several types of fraud by applying the machine learning models to call data.

Patent US 11,330,023 discloses a system for intercepting fraudulent calls, implementing a machine learning spam detection component that detects spam based on audible features, using natural language processing, pattern matching or other suitable techniques to identify words included in communications, or speech recognition techniques to identify voice signatures or other audible features.

Application US 2021/0383393 describes a system for sending a warning when a fraud indication value reaches a certain threshold, said value being derived from a fraud detection machine learning model that processes factors associated with a customer transaction at a retail location of a telecommunications service provider. Examples of factors studied are frequency, account activity factor, credit score, caller and called party telephone numbers, whether the telephone number is the one of a current subscriber or not.

Frauds and fraudsters behavior however keeps changing from time to time. Hence a static solution will not be generic.

There is a need to further improve automatic detection of frauds online, especially to define and provide a method able to detect the changing behaviors of the frauds, and to deal with several frauds at the same time.

The present invention notably seeks to meet this need.

### Disclosure of the invention

One subject of the invention is a computer-implemented method for detecting frauds online in a telecommunication network, using a pattern matching module trained beforehand to learn reference patterns, each reference pattern comprising at least one parameter associated with at least one fraud method, said reference patterns being stored beforehand in a patterns database, the method comprising at least the following steps:
a. when an outgoing or incoming transaction is detected on said telecommunication network, retrieving at least one parameter associated with said transaction to form a transaction pattern,
b. operating said pattern matching module on said transaction pattern, and
c. taking an action if a match is found between said transaction pattern and at least one reference pattern, indicating that the current transaction is a fraud.

The computer implemented method according to the invention provides a generalized and dynamic solution to understand and prevent different telecommunication frauds.

The disclosed invention is adaptive and allows to continuously update itself with new fraud patterns in a shared collaborative environment. All users can provide incoming or outgoing transaction detail records and benefit from the results of the matching module.

The method according to the invention uses federative learning enabling the recognition in real time of several types of fraud methods. The solution is indeed collaborative between the different users involved, notably through the blockchain, which allows fraud patterns to be shared and learned, thus adapting to new fraud methods.

Additionally, the method is based on a collaborative scheme where users both feed and benefit about fraud detection.

By "transaction", it has to be understood a voice call, SMS or data session.

### Patterns

The idea that each fraud method could be defined through one or several pattens comes from the observation that any fraudulent data can be viewed as a combination of various fraudulent behaviors that are hidden or detected.

The reference patterns may comprise at least the following parameters: calling number, called number, callee and/or caller location information, timing information, number of calls placed by a calling number in a predefined period of time, number of calls received by a called number in a predefined period of time, presence of calling and/or called number in a range of suspicious numbers

The reference patterns may comprise the parameters listed in the non-exhaustive Table I below, alone or in any combination:

**TABLE I - Example of fraud parameters**

| Symbols | Description |
|---|---|
| d | Call Detail Records dataset |
| *A*/*a* - *number* | calling number |
| *B*/*b* - *number* | called number |
| *C*/*c* - *number* | re-routing number |
| *τₘᵢₙ* | threshold conversation time |
| *τₐ* | average conversation time |
| *t_{c}* | conversation time |
| *tₛ* | call start time |
| *ε* | callback time difference |
| *i_{c}* | Interconnection cost |
| Δ*c* | Interconnection cost threshold |
| *Nₜ* | Number of calls threshold |
| *N* | Total Number of calls |
| *tᵣ* | Training time taken by algorithm |
| *tᵢ* | Inference time taken by algorithm |
| Δ*τ* | threshold time difference |
| n | Number of numbers called/ number of times same number is called |
| (*B*)*ₙ* | same numbers called n times |
| *A..xxx,...A..xxn,* | sequential numbers differing only by last few digits |

To identify a reference pattern referred as the broadcast pattern, one may take into account one phone number that makes calls to many target phone numbers (B1, ..., Bn) within a fixed time frame.

Said patterns database may comprise reference patterns associated with several different fraud methods.

Several reference patterns may be associated with a unique fraud method, and a unique reference pattern may be associated with several different fraud methods.

### Online pattern detection

Step a of retrieving at least one parameter associated with the transaction to form a transaction pattern may be performed when said transaction is initiated, ongoing or completed.

At least the data from the historical Call Details Records (CDR) database of at least one users of the telecommunication network are advantageously used to build the patterns database, said CDR data being analyzed and major reference patterns defining different telecommunication fraud methods being stored in the patterns database.

The method may further use a numbers database comprising numbers detected beforehand as associated with a fraud method, the number of the current transaction being compared with the numbers stored in the numbers database.

In an embodiment, the method may first look for a number match in said numbers database. If not found, the method may follow with at least steps a to c.

The numbers may thus be updated in real time in the numbers database after step c. In case the numbers are involved in a known fraud method detected by the reference patterns, then it is flagged as fraudulent in the numbers database.

Advantageously, the reference patterns stored in the patterns database are updated at each new transaction. Continuous training and refining of pattern wise global models through federated machine learning approach is achieved.

### Offline pattern matching

The pattern matching module may comprise at least a neural network.

The pattern matching module may use several machine learning models. The machine learning model best suited for each pattern may be stored and handled at user level. Said machine learning models may be classification algorithms, which make good detection in general. Within said classification algorithms, ensemble classifiers XGBoost and Random Forest could yield the best results since they gave the lowest False Negatives and False Positives for the Wangiri Fraud.

In step c, said action may comprise: sending a signal to initiate blocking of the fraudulent caller, or informing the callee, or ending the transaction or forwarding the transaction to a third party, such as an automated phone system for example.. A preventive or curative action may be activated.

Said action may concerned the calling number as well as the callee, based on the detected fraud method. Actions may also be considered inversely on outgoing transactions, such as a temporary blocking to avoid callbacks following the Wangiri fraud.

In the contrary, if a match is not found between said at least one parameter of said current transaction and the parameter(s) of at least one reference pattern, the current transaction is considered as not fraudulent, and normal transaction connection is continued. The local CDR database may be updated with a new record.

The method according to the invention can be implemented by a computer in the broadest sense, i.e. by any electronic system, which may include a set of several machines and have computer processing capabilities. Classically, a computer comprises a processor, a memory, a human-machine interface, for example a keyboard, a mouse or a touch screen, a screen and a communication module, in particular Ethernet, WIFI, Bluetooth^{®} or using a mobile telephone technology, for example a technology operating with the GSM, GPRS, EDGE, LTE or UMTS protocols.

### Users and shared knowledge

The transaction details from the telecommunication network are advantageously used by several users, the method using local reference patterns stored in local patterns databases linked to each user, said local reference patterns being further stored in a global cloud server linked to a global pattern matching module, especially using integrity checks and authentication mechanisms, for example using a fraud pattern blockchain.

In the case of the use of the blockchain, each user in the network may manage a node in the blockchain. The invention offers a decentralized architecture with shared access to data (patterns, models etc.) available in the blockchain.

Thanks to the use of the blockchain, the data are handled in a ledger-based way, allowing to record transactions in a blockchain ledger in multiple places at the same time.

All the users in the blockchain benefit from the transaction patterns and are able to detect corresponding fraud methods before their implementation by the affected fraudsters.

Security of shared patterns and data are ensured using the blockchain.

When a fraud pattern is detected by the pattern detection module of a user, first it may be checked if the pattern is already existing in the blockchain. If not found, the newly found pattern is preferably added as a signed block which is validated by all the users in the blockchain. After the validation, the newly found pattern may be updated in the blockchain available for all users.

Other useful data such as the optimized Machine Learning model for detection of a specific pattern may also be shared using this blockchain among the users.

The models of the pattern matching module of each user being trained to detect the patterns continuously, the global model of said global pattern matching module is advantageously updated as well, especially in said fraud pattern blockchain. Updated model weights may be sent to the users.

When a new fraud type or a new pattern for an existing fraud method is found, the distributed blockchain is advantageously updated in a secure manner.

During real time data streaming, the optimized machine learning algorithm, if it exists, since it remains optional for use by the user, is retrieved from the blockchain and used for fraud detection.

The transaction details from the telecommunication network being used by several users, parameters associated with transactions may be shared between the users to detect frauds online.

The method according to the invention thus benefits from shared network resources.

### System

According to another one of its aspects, the invention also relates to a system for automatically detecting frauds online in a telecommunication network, the system being adapted to perform the method according to the invention and previously described.

The system may comprise a pattern detection module and a pattern matching module trained beforehand, especially on historical CDR data, to learn reference patterns,

said pattern detection module being configured to, when an outgoing or incoming transaction is detected on said telecommunication network, retrieve at least one parameter associated with said transaction to form a transaction pattern, and
said pattern matching module being configured to be operated on said transaction pattern to assess if there is a match between said transaction pattern and at least one reference pattern.

The system may also comprise a number matching module using a numbers database comprising numbers detected beforehand as associated with a fraud method, said number matching module being configured to compare the calling and/or called number of the current transaction with the numbers stored in said numbers database.

The system may also comprise a user level notification module.

The features described for the method applies to the system and vice and versa.

### Computer program

According to another one of its aspects, the invention also relates to a computer program comprising instructions which, when the program is executed on a computer, cause the computer to carry out the steps of the method according to the invention and previously described.

The features described for the method applies to the computer program and vice and versa.

### Brief description of the drawings

The invention may be better understood upon reading the following detailed description of nonlimiting implementation examples thereof and on studying the appended drawing, in which:
- figure 1 is a diagram illustrating some steps of an example of the method according to the invention,
- figure 2 is a diagram illustrating an example of the system according to the invention,
- figure 3 represents the use and handling of the data amongst the users of the network in the method according to the invention,
- figure 4 is a diagram illustrating another example of the system according to the invention, and
- figure 5 illustrates the sharing of the data among different users in the network.

### Detailed description

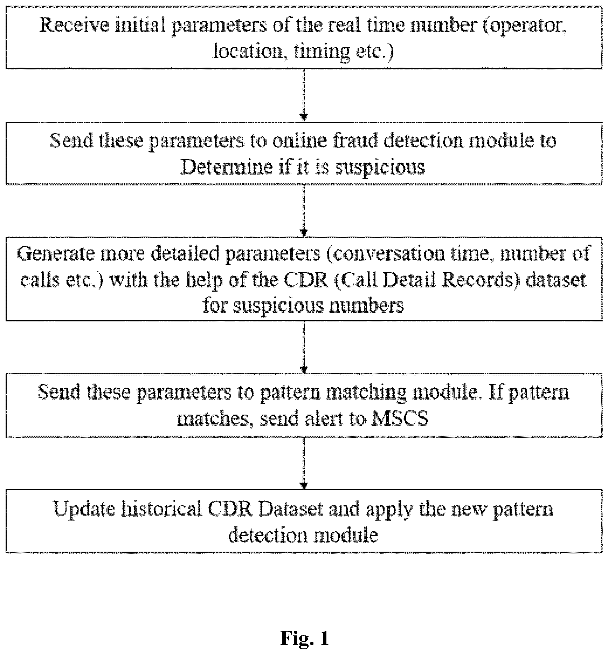

Figure 1 illustrates an example of the method according to the invention.

In this embodiment, at a first step, the system receives initial parameters of the real time number (operator, location, timing, etc.). These parameters are then sent to the pattern detection module to determine if they are suspicious or not.

More detailed parameters may be generated in another step, for example conversation time, number of calls, etc., with the help of the CDR dataset for suspicious numbers.

These parameters are sent to the pattern matching module. If a match is found, an alert is sent to the mobile switching center server (MSCS). The historical CDR dataset is updated, and the new pattern detection module will then be applied.

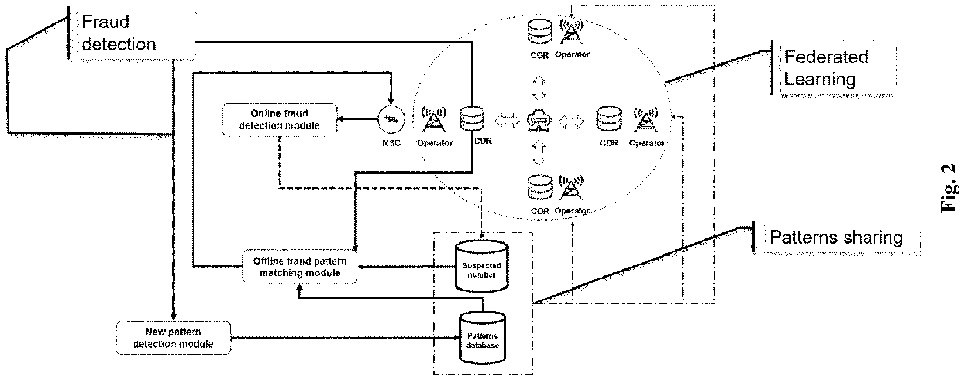

Figure 2 illustrates an example of the system according to the invention.

The system for detecting frauds online in a telecommunication network comprises a pattern detection module, also called online fraud detection module, and an offline fraud pattern matching module trained beforehand to learn reference patterns, each reference pattern comprising at least one parameter associated with at least one fraud method, said reference patterns being stored beforehand in a patterns database, as shown in figure 2.

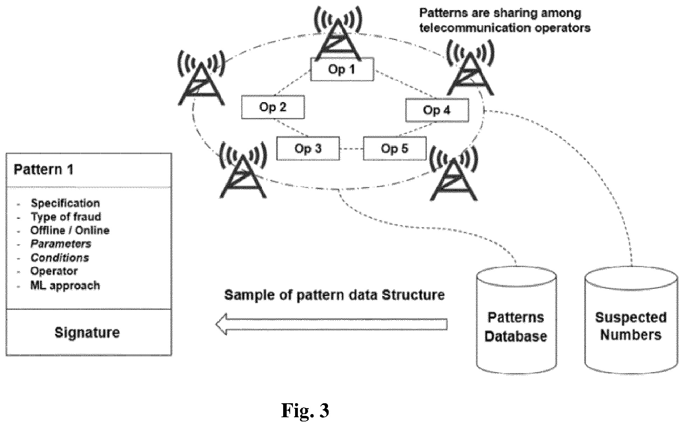

The patterns database, as illustrated in the example of figure 3, comprises a pattern "Pattern 1", comprising several parameters: specification, type of fraud, offline/online, transaction parameters, conditions, operator, Machine Learning approach. If the parameters related to one pattern validate some thresholds, the transaction could be identified as a fraud.

The reference patterns may comprise at least the parameters as described above.

The pattern detection module is configured to, when an outgoing or incoming transaction is detected on the mobile switching center of said telecommunication network, retrieve at least one parameter associated with said transaction to form a transaction pattern.

As illustrated and preferably, the pattern matching module is trained beforehand on historical CDR data to learn reference patterns. The pattern matching module is configured to be operated on said transaction pattern to assess if there is a match between the transaction pattern and at least one reference pattern. An action, as described above, is taken if a match is found between said transaction pattern and at least one reference pattern, indicating that the current transaction is a fraud.

The system according to the invention may also comprise a number matching module using a numbers database comprising numbers detected beforehand as associated with a fraud method. The number matching module is configured to compare the calling and/or called number of the current transaction with the numbers stored in said numbers database.

In this embodiment and preferably, the reference patterns stored in the patterns database are updated at each new transaction, as well as the numbers in the numbers database.

The step of retrieving at least one parameter associated with the transaction to form a transaction pattern is performed when said transaction is initiated, ongoing or completed.

As shown in the embodiment of figures 2 and 3, the transaction details from the telecommunication network are used by several users Op1, Op2, Op3, Op4, Op5. This embodiment uses the blockchain, and blockchain data are shared among the different users. Each new entry is validated by the other users before updating in a central database. Data are stored in blockchain with secure shared access for all the users.

Parameters associated with transactions are thus shared between the users to detect fraud methods online.

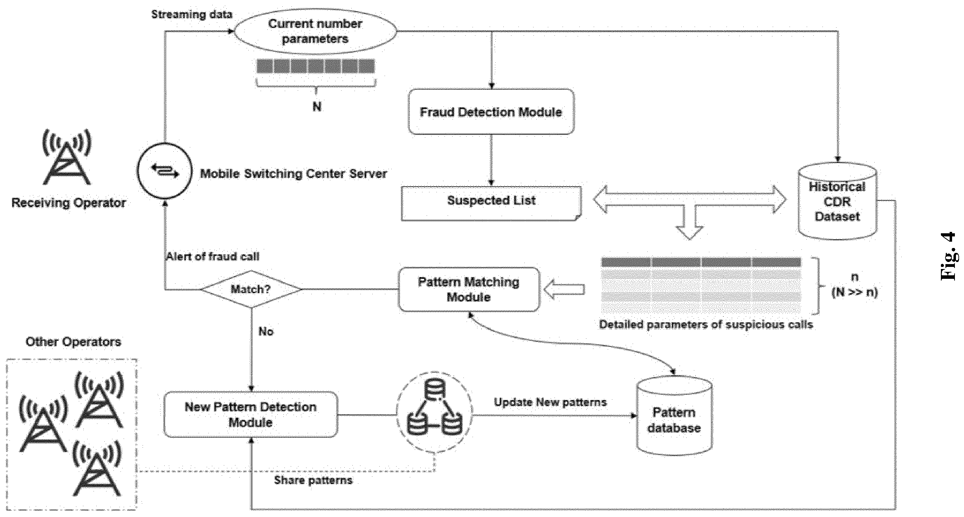

Figure 4 illustrates the architecture of the system according to the invention at individual user level. It can be seen that the updated new patterns contribute to form a new pattern detection module, and that said patterns are shared with the other users, also called operators.

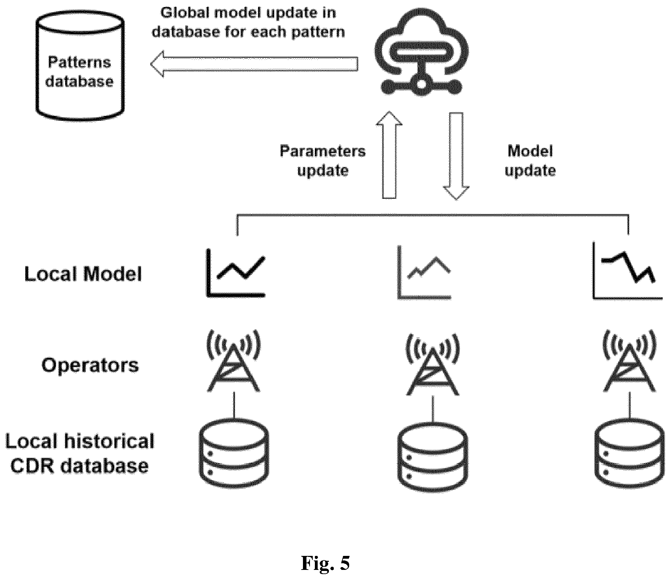

As illustrated by figure 5, the invention advantageously uses local reference patterns stored in local patterns databases linked to each user, said local reference patterns being further stored in a global cloud server linked to a global pattern matching module.

The blockchain is advantageously used, involving integrity checks and authentication mechanisms.

The models of the pattern matching module of each user is trained to detect the patterns continuously, the global model of said global pattern matching module is thus updated as well, and updated model weights are sent to the users.

The invention is not limited to the examples that have just been described.

For example, different models and different parameters associated with transactions may be used in the method according to the invention.

## Claims

1. Computer-implemented method for detecting frauds online in a telecommunication network, using a pattern matching module trained beforehand to learn reference patterns, each reference pattern comprising at least one parameter associated with at least one fraud method, said reference patterns being stored beforehand in a patterns database, the method comprising at least the following steps:
a. when an outgoing or incoming transaction is detected on said telecommunication network, retrieving at least one parameter associated with said transaction to form a transaction pattern,
b. operating said pattern matching module on said transaction pattern, and
c. taking an action if a match is found between said transaction pattern and at least one reference pattern, indicating that the current transaction is a fraud.

2. Computer-implemented method as claimed in any one of the preceding claims, wherein the reference patterns comprise at least the following parameters: calling number, called number, callee and/or caller location information, timing information, number of calls placed by a calling number in a predefined period of time, number of calls received by a called number in a predefined period of time, presence of calling and/or called number in a range of suspicious numbers

3. Computer-implemented method as claimed in claim 1, wherein said patterns database comprises reference patterns associated with several different fraud methods.

4. Computer-implemented method as claimed in the preceding claim, wherein the transaction details from the telecommunication network are used by several users, the method using local reference patterns stored in local patterns databases linked to each user, said local reference patterns being further stored in a global cloud server linked to a global pattern matching module, especially using integrity checks and authentication mechanisms, for example using a fraud pattern blockchain.

5. Computer-implemented method as claimed in any of the preceding claims, wherein, the transaction details from the telecommunication network being used by several users, parameters associated with transactions are shared between the users to detect frauds online.

6. Computer-implemented method as claimed in any one of the preceding claims, wherein several reference patterns are associated with a unique fraud method, and a unique reference pattern is associated with several different fraud methods.

7. Computer-implemented method as claimed in any one of the preceding claims, wherein the reference patterns stored in the patterns database are updated at each new transaction.

8. Computer-implemented method as claimed in any one of the preceding claims, further using a numbers database comprising numbers detected beforehand as associated with a fraud method, the number of the current transaction being compared with the numbers stored in the numbers database.

9. Computer-implemented method as claimed in any one of the preceding claims, wherein step a of retrieving at least one parameter associated with the transaction to form a transaction pattern is performed when said transaction is initiated, ongoing or completed.

10. Computer-implemented method as claimed in any one of the preceding claims, wherein said action comprises: sending a signal to initiate blocking of the fraudulent caller, or informing the callee, or ending the transaction or forwarding the transaction to a third party, such as an automated phone system for example.

11. System for detecting fraud methods online in a telecommunication network, the system being adapted to perform the method according to any one of the preceding claims.

12. System as claimed in the preceding claim, comprising a pattern detection module and a pattern matching module trained beforehand, especially on historical CDR data, to learn reference patterns,
said pattern detection module being configured to, when an outgoing or incoming transaction is detected on said telecommunication network, retrieve at least one parameter associated with said transaction to form a transaction pattern, and
said pattern matching module being configured to be operated on said transaction pattern to assess if there is a match between said transaction pattern and at least one reference pattern.

13. System as claimed in claim 11 or 12, comprising a number matching module using a numbers database comprising numbers detected beforehand as associated with a fraud method, said number matching module being configured to compare the calling and/or called number of the current transaction with the numbers stored in said numbers database.

14. A computer program comprising instructions which, when the program is executed on a computer, cause the computer to carry out the steps of the method according to any one of claims 1 to 10.
